# EUROPEAN PATENT APPLICATION

(11) **EP 4 040 111 A1**
(43) Date of publication of application: **10.08.2022**
(21) Application number: 21213336.7
(22) Date of filing: 09.12.2021
(51) Int. Cl.: G01C 21/00, G06V 20/56

(54) **MAP PROCESSING METHOD AND APPARATUS**

(30) Priority: 04.02.2021 CN 202110154824
(71) Applicant: Guangzhou Xiaopeng Autopilot Technology Co., Ltd., Guangzhou, Guangdong 510000 (CN)
(72) Inventor: Liu, Zhongyuan, Guangzhou (CN); Gu, Minghui, Guangzhou (CN); Chai, Wennan, Guangzhou (CN); Huang, Ya, Guangzhou (CN); Li, Hongjun, Guangzhou (CN); Ouyang, Zhan, Guangzhou (CN); Xiao, Zhiguang, Guangzhou (CN); Jiang, Shaofeng, Guangzhou (CN)
(74) Representative: Habermann, Hruschka & Schnabel

(57) **Abstract**

Embodiments of the present disclosure provide a map processing method and apparatus. The method includes: constructing first map data when a vehicle is located in a parking lot and in a power-off state; triggering a construction of second map data when the vehicle is detected to be switched to a power-on state; and obtaining third map data by splicing the first map data and the constructed second map data in response to the vehicle driving out of the parking lot. In the embodiments of the present disclosure, a general parking lot map applicable to the indoor or outdoor parking lots can be constructed.

## Description

### TECHNICAL FIELD

The present disclosure relates to the field of map technologies, and more particularly, to a map processing method and apparatus.

### BACKGROUND

With the development of intelligent networked vehicles, an intelligent system of a vehicle has a strong sensing system, a positioning system, a networking system, and a computing system. The vehicle can collect relevant data and upload it to a cloud, and construct a map on the vehicle or the cloud.

With the accumulation of data, a large number of maps of indoor and outdoor parking lots can be constructed and used by an intelligent networking vehicle. After the intelligent networked vehicle is positioned in a map of a parking lot, it can perform autonomous driving, valet parking, and smart summon, and the like.

However, current methods for constructing a map of a parking lot have poor versatility and cannot be applied to the indoor and outdoor parking lots at the same time.

### SUMMARY

In view of the above problems, the present disclosure provides a map processing method and apparatus, capable of overcoming or at least partially solving the above problems.

A map processing method is provided. The method includes: constructing first map data when a vehicle is located in a parking lot and in a power-off state; triggering a construction of second map data when the vehicle is detected to be switched to a power-on state; and obtaining third map data by splicing the first map data and the constructed second map data in response to the vehicle driving out of the parking lot.

Optionally, prior to said obtaining the third map data by splicing the first map data and the constructed second map data, the method further includes: determining whether the vehicle drives out of a predetermined range of the parking lot; and obtaining the constructed second map data in response to the vehicle driving out of the predetermined range.

Optionally, said obtaining the third map data by splicing the first map data and the constructed second map data includes: determining, in the first map data, information of a first road on which the vehicle is located when the vehicle is switched to the power-off state, and determining, in the constructed second map data, information of a second road on which the vehicle is located when the vehicle is switched to the power-on state; and splicing the first map data and the constructed second map data based on the information of the first road and the information of the second road to obtain the third map data.

Optionally, the method further includes: optimizing semantic elements in the third map data; and fusing matched semantic elements in the optimized third map data.

Optionally, said optimizing the semantic elements in the third map data includes: determining repetitive road data in the third map data; and matching semantic elements in the repetitive road data, and adjusting poses of the semantic elements based on a matching relation of the semantic elements.

Optionally, the method further includes: determining entrance location information of the parking lot when the parking lot is an indoor parking lot; and determining, based on the entrance location information, an area range for triggering a selection of the parking lot.

Optionally, the method further includes: determining identification location information of the parking lot when the parking lot is an outdoor parking lot; and determining, based on the identification location information, an area range for triggering a selection of the parking lot.

Optionally, the area range includes a first area range and a second area range, and the second area range is a subset of the first area range.

A map processing apparatus is provided. The apparatus includes: a first map data construction module configured to construct first map data when a vehicle is located in a parking lot and in a power-off state; a second map data construction triggering module configured to trigger a construction of second map data when the vehicle is detected to be switched to a power-on state; and a third map data generating module configured to obtain third map data by splicing the first map data and the constructed second map data in response to the vehicle driving out of the parking lot.

Optionally, the apparatus further includes: a predetermined range determining module configured to determine whether the vehicle drives out of a predetermined range of the parking lot; and a second map data obtaining module configured to obtain the constructed second map data in response to the vehicle driving out of the predetermined range.

Optionally, the third map data generating module includes: a road information determining submodule configured to determine, in the first map data, information of a first road on which the vehicle is located when the vehicle is switched to the power-off state, and determine, in the constructed second map data, information of a second road on which the vehicle is located when the vehicle is switched to the power-on state; and a splicing submodule configured to splice the first map data and the constructed second map data based on the information of the first road and the information of the second road to obtain the third map data.

A vehicle includes a processor, a memory, and a computer program stored on the memory and executable on the processor. The computer program, when executed by the processor, implements the map processing method as described above.

A computer-readable storage medium has a computer program stored thereon. The computer program, when executed by a processor, performs the map processing method described above.

The embodiments of the present disclosure have the following advantages.

According to embodiments of the present disclosure, the first map data is constructed when the vehicle is located in the parking lot and in the power-off state, the construction of the second map data is triggered when the vehicle is detected to be switched to the power-on state, further, the third map data is obtained by splicing the first map data and the constructed second map data in response to the vehicle driving out of the parking lot. In this way, a general parking lot map applicable to the indoor or outdoor parking lots can be constructed.

### BRIEF DESCRIPTION OF DRAWINGS

In order to clearly explain technical solutions of the present disclosure, drawings used in the description of the present disclosure are briefly described below. Obviously, the drawings as described below are merely some embodiments of the present disclosure. Based on these drawings, other drawings can be obtained by those skilled in the art without paying creative efforts.
FIG. 1a is a flowchart of steps of a map processing method according to an embodiment of the present disclosure;
FIG. 1b is a schematic diagram of a vehicle trajectory according to an embodiment of the present disclosure;
FIG. 1c is another schematic diagram of another vehicle trajectory according to an embodiment of the present disclosure;
FIG. 1d is yet another schematic diagram of yet another vehicle trajectory according to an embodiment of the present disclosure;
FIG. 2 is a flowchart of steps of another map processing method according to an embodiment of the present disclosure; and
FIG. 3 is a schematic structural diagram of a map processing apparatus according to an embodiment of the present disclosure.

### DESCRIPTION OF EMBODIMENTS

In order to clarify and explain the above objects, features and advantages of the present disclosure, the present disclosure will be further described in detail below in conjunction with the accompanying drawings and specific embodiments. Obviously, the embodiments described herein are only part of, rather than all of embodiments of the present disclosure. Based on the embodiments of the present disclosure, other embodiments obtained by those skilled in the art shall fall within scope of the present disclosure.

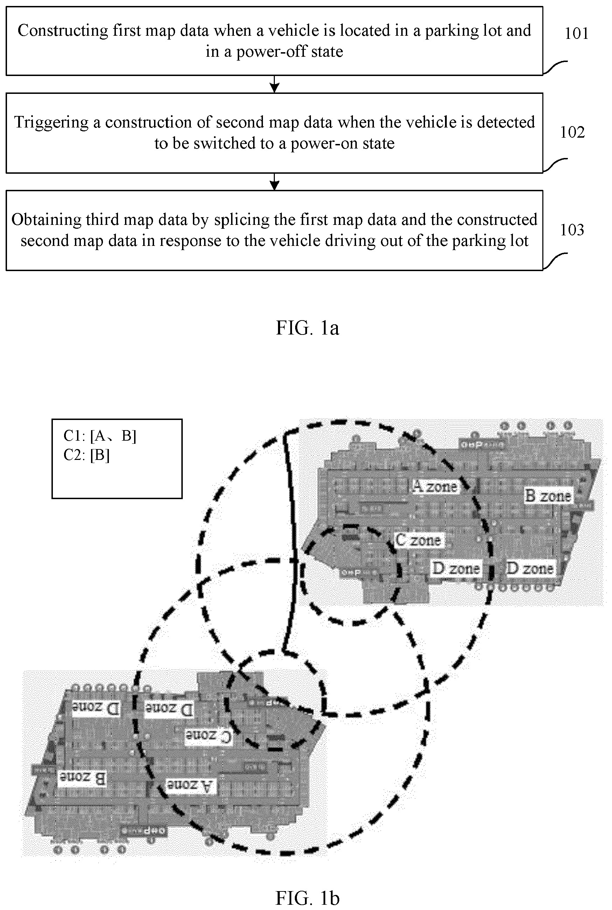

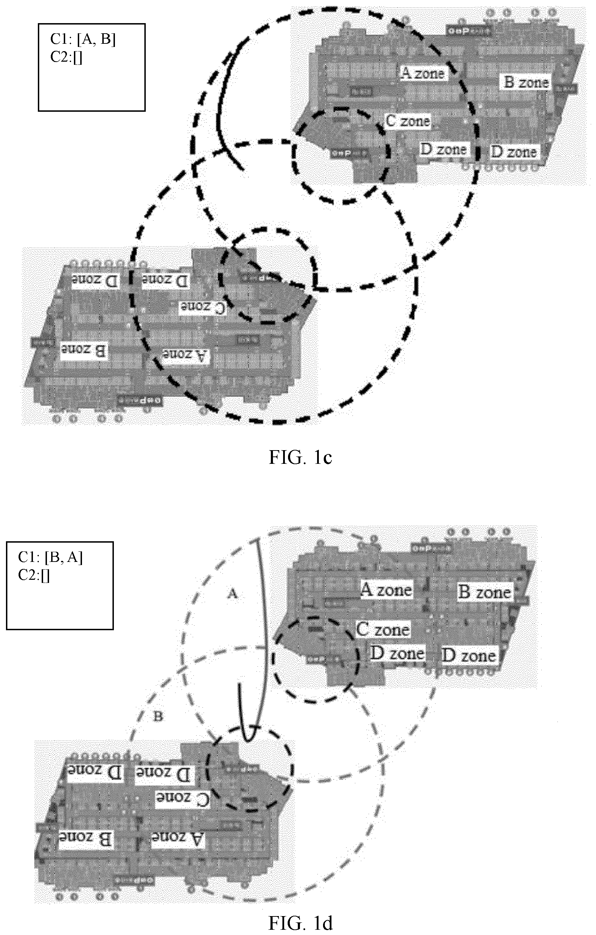

FIG. 1a is a flowchart of steps of a map processing method according to an embodiment of the present disclosure. Referring to FIG. 1a, the map processing method may specifically include the following steps.

At step 101, first map data is constructed when a vehicle is located in a parking lot and in a power-off state.

In practical applications, in a driving process of a vehicle, an on-board computer can periodically collect sensing data, positioning data, and other data required to construct a map, the collected data can be put into a container, and the size of the container may be set as a fixed mileage of the vehicle.

For example, in case of that the size of the container is 5km, new data is inserted into the container if the data collected by the container is less than 5km, and when the data in the container reaches 5km, a new set of data is inserted into the container while the oldest set of data in the container is deleted.

The collected data may include GPS latitude and longitude, positioning accuracy information, vehicle locking signal, vehicle dead reckoning, visual perception information, etc.

The vehicle dead reckoning information may include at least a position and a heading direction (absolute heading direction or relative heading direction) of the vehicle. If no vehicle dead reckoning information exists, collected are a wheel speed signal, a wheel pulse signal, a steering wheel angle signal, an IMU angular velocity (at least z-axis angular velocity) signal, and the like.

The visual perception information may include parking space information, lane line information, traffic identification information, and the like.

After the vehicle drives into a target parking lot and parks in a target parking space of the target parking lot, the vehicle can be locked and powered off. When the vehicle is determined to be located in the parking lot based on data collected by the vehicle sensor and the vehicle is detected to be locked and in the power-off state, data collected during the driving process of the vehicle before the vehicle is locked and powered off can be obtained, and based on the obtained data, the first map data of the target parking lot are constructed.

In an example, a scene determination of the parking lot may be performed as follows.

When traversing through the container from the latest data in the container, if there is always a parking space within a distance of predetermined mileage (for example, 100 meters, and the predetermined mileage is adjustable) and a density of parking spaces is greater than a predetermined density value of the parking spaces (for example, 0.2/m, the predetermined density value of the parking spaces is adjustable), it can be determined that the interval is a parking lot.

In an example, a uniform format needs to be set for the map of the parking lot. For example, the map data is required to contain at least semantic element coordinates, types, travel tracks, and the like. The parking lots are classified into at least two types, i.e., outdoor parking lot and indoor parking lot. An area range of the parking lot includes at least a first area range and a second area range, and may include GPS coordinates of a center point of the area range, a boundary description of the area range, and the like.

At step 102, a construction of second map data is triggered when the vehicle is detected to be switched from the power-off state to a power-on state.

After the first map data is constructed, when it is detected that the vehicle is switched from the powered-off state to the powered-on state, the data can be collected continuously and the construction of the second map data can be triggered.

At step 103, third map data is obtained by splicing the first map data and the constructed second map data in response to the vehicle driving out of the parking lot.

When the vehicle drives out of the parking lot, the first map data and the constructed second map data may be spliced to obtain the third map data.

In an embodiment of the present disclosure, prior to obtaining the third map data by splicing the first map data and the constructed second map data, the method further includes: determining whether the vehicle drives out of a predetermined range of the parking lot; and obtaining the constructed second map data in response to the vehicle driving out of the predetermined range.

In practical applications, prior to obtaining the third map data by splicing the first map data and the constructed second map data, and after the vehicle is switched from the power-off state to the power-on state, it is determined whether the vehicle drives out of the predetermined range where the parking lot is located based on a current positioning of the vehicle. The predetermined range can be determined based on required characteristics of the map of the parking lot. The constructed second map data is obtained only when the vehicle drives out of the predetermined range of the parking lot, thereby guaranteeing an integrity of the third map data obtained after the splicing.

When the vehicle drives out of the predetermined range, the constructed second map data can be obtained from a cloud or the vehicle. The constructed second map data may begin to be constructed at the time that the vehicle is switched from the power-off state to the power-on state, the data is continuously updated in the driving process of the vehicle to construct the map, and the construction of the second map data is completed before the maps are spliced and after the vehicle drives out of the parking lot.

In an embodiment of the present disclosure, the method further includes: determining entrance location information of the parking lot when the parking lot is an indoor parking lot; and determining, based on the entrance location information, an area range for triggering a selection of the parking lot.

In an embodiment of the present disclosure, the area range includes a first area range and a second area range, and the second area range is a subset of the first area range.

In practical applications, after the map of the parking lot (e.g., the first map data or the third map data) is constructed, it may be further determined whether the parking lot is an indoor parking lot. When the parking lot is an indoor parking lot, the entrance location information of the parking lot can be determined based on the constructed map of the parking lot. Further, the area range that triggers a selection of the parking lot can be determined.

The area range may include a first area range and a second area range, and the second area range is a subset of the first area range.

In an example, a GPS signal may be obtained and it is determined whether the GPS signal is smaller than a predetermined GPS signal threshold, and when the GPS signal is determined to be smaller than the predetermined GPS signal threshold, the parking lot is determined to be an indoor parking lot; otherwise, the parking lot is an outdoor parking lot.

The GPS signal may specifically be represented by the number of satellites and a carrier-to-noise ratio. When satellite data is smaller than the predetermined number of satellites and/or the carrier-to-noise ratio is lower than a predetermined carrier-to-noise ratio, it can be determined that the GPS signal is smaller than the predetermined GPS signal threshold; and when the satellite data is greater than or equal to the predetermined satellite number and/or the carrier-to-noise ratio is greater than or equal to the predetermined carrier-to-noise ratio, it can be determined that the GPS signal is greater than or equal to the predetermined GPS signal threshold.

In an example, the first area range and/or the second area range can be determined with an entrance location of the parking lot as a center, and a shape of the first area range and/or a shape of the second area range may be a circle or a polygon. When the shape of the first area range and/or the shape of the second area range are/is a circle, the entrance location of the parking lot is the center of the circle, and when the shape of the first area range and/or the shape of the second area range are/is a polygon, the entrance location of the parking lot is the center position of the polygonal shape.

In practical applications, the first area range and/or the second area range may be represented by a distance to the entrance location of the parking lot, or may also be represented by coordinates of points at a boundary of the first area range and/or the second area range.

In an embodiment of the present disclosure, the method further includes: determining identification location information of the parking lot when the parking lot is an outdoor parking lot; and determining, based on the identification location information, an area range for triggering a selection of the parking lot.

In practical applications, after the map of the parking lot (e.g., the first map data or the third map data) is constructed, it may be further determined whether the parking lot is an outdoor parking lot. When the parking lot is an outdoor parking lot, an identification location of the parking lot can be determined based on the constructed map of the parking lot, and further, the area range that triggers the selection of the parking lot can be determined.

The area range may include a first area range and a second area range, and the second area range is a subset of the first area range.

In an example, the identification location of the parking lot may be a center position of the shape of the entire parking lot, or may be an identification location within a certain range of the center position. The first area range and/or the second area range may be determined with the identification location of the parking lot as a center, a shape of the first area range and/or a shape of the second area range may be a circle or a polygon. When the shape of the first area range and/or the shape of the second area range is a circle, the identification location of the parking lot is a center position of the circle, and when the shape of the first area range and/or the shape of the second area range is a polygon, the identification location of the parking lot is a center position of the polygon shape.

In practical applications, the first area range and/or the second area range may be represented by a distance to the identification location of the parking lot, and may also be represented by coordinates of points at a boundary of the first area range and/or the second area range.

In an example, the first area range or the second area range of the parking lot may be configured to select a target parking lot from a plurality of nearby parking lots while the vehicle is travelling, invoke a map of the target parking lot, and correspondingly convert a positioning coordinate system of the vehicle. The method for selecting the target parking lot is described as below.

At step S11, when it is detected that the vehicle drives into the first area range for triggering the selection of the parking lot, a parking lot identification is added to a first set of candidate parking lots.

In practical applications, the vehicle or the cloud may store a plurality of parking lot maps, and for each parking lot map, the area range for triggering the selection of the parking lot is provided. The area range may be divided into the first area range and the second area range, where the second area range is a subset of the first area range.

During the driving process of the vehicle, distances between the vehicle and the nearby parking lots can be determined based on coordinates of the vehicle, such that the vehicle can be determined to be located within the area ranges of one or more parking lots, and the vehicle can determine the target parking lot from the one or more parking lots.

When it is detected that the vehicle drives into the first area range for triggering the selection of the parking lot, the parking lot identification can be obtained and added to the first set of the candidate parking lots.

At step S12, when it is detected that the vehicle drives into the second area range for triggering the selection of the parking lot, the parking lot identification is added to a second set of the candidate parking lots. The second area range is a subset of the first area range.

At step S13, when a triggering event is detected, the target parking lot is selected based on the first set of the candidate parking lots and/or the second set of the candidate parking lots.

When the triggering event is detected, the target parking lot can be selected based on the first set of the candidate parking lots and/or the second set of the candidate parking lots. Thus, map data of the target parking lot can be invoked from the map data of the plurality of parking lots form the vehicle or the cloud based on the parking lot identification, and the location of the vehicle can be converted into a coordinate system corresponding to the map data of the target parking lot, so as to obtain an accurate location of the vehicle in the map of the target parking lot, thereby achieving an accurate parking.

In an example, upon detecting that the vehicle drives out of the first area range, the parking lot identification is deleted from the first set of the candidate parking lots; upon detecting that the vehicle drives out of the second area range, the parking lot identification is deleted from the second set of the candidate parking lots.

Step S13 may be specifically divided into the following cases.
(I) When the triggering event is detected and the second set of the candidate parking lots includes the parking lot identification, the target parking lot is selected based on the second set of the candidate parking lots.

In an example, the target parking lot is selected based on an order of the identifications of the parking lots in the second set of the candidate parking lots.

The order may be a chronological order of adding the parking lot identification to the second set of candidate parking lots or an order of parking fee of the parking lots.

For example, as illustrated in FIG. 1b, there are two parking lots in a vicinity of the vehicle, i.e., parking lot A and parking lot B. The vehicle travels along a trajectory shown in FIG. 1b, and successively drives into the first area range of the parking lot A, the first area range of the parking lot B, and the second area range of the parking lot B. Thus, in the first set C1 of the candidate parking lots, the chronological order of the identifications of the parking lots is A, B; in the second set C2 of the candidate parking lots, the chronological order of the identifications of the parking lots is B, and in this case, the vehicle activates an autonomous driving module, and due to the presence of the identification in C2, the parking lot B is determined as the target parking lot based on the identification in C2.
(II) When the triggering event is detected and the second set of the candidate parking lots includes no parking lot identification, the target parking lot is selected based on the first set of the candidate parking lots.

In an example, the target parking lot is selected based on an order of the identifications of the parking lots in the first set of the candidate parking lots.

The order may be a chronological order of adding the parking lot identification to the first set of candidate parking lots or an order of parking fee of the parking lots.

For example, as illustrated in FIG. 1c, there are two parking lots in the vicinity of the vehicle, i.e., parking lot A and parking lot B. The vehicle travels along the trajectory shown in FIG. 1c, and successively drives into the first area range of the parking lot A and the first area range of the parking lot B. Thus, in the first set C1 of the candidate parking lots, the chronological order of the identifications of the parking lots is A, B; in the second set C2 of the candidate parking lots, the parking lot identification is absent, and in this case, the vehicle activates the autonomous driving mode, and due to the absence of the parking lot identification in C2, the parking lot A can be determined as the target parking lot based on the identifications in C1.

In an example, said selecting the target parking lot based on the first set of candidate parking lots includes: determining a parking lot identification that is least recently deleted from the second set of candidate parking lots; and when the parking lot identification that is least recently deleted exists in the first set of candidate parking lots, the target parking lot is selected based on the parking lot identification that is least recently deleted.

For example, as illustrated in FIG. Id, there are two parking lots in the vicinity of the vehicle, i.e., parking lot A and parking lot B. The vehicle travels along the trajectory shown in FIG. Id. The vehicle successively drives into the first area range of the parking lot A, the first area range of the parking lot B and the second area range of the parking lot B, and drives out of the second area range of the parking lot B. Thus, in the first set C1 of the candidate parking lots, the chronological order of the identifications of the parking lots is A, B; in the second set C2 of candidate parking lots, the parking lot identification is absent. In this case, the vehicle activates the autonomous driving mode, the parking lot identification is absent in C2, the parking lot identification B is least recently deleted from C2, and the identification B also exists in C1, and thus the parking lot B is determined as the target parking lot.

In the embodiments of the present disclosure, the first map data is constructed when the vehicle is located in the parking lot and in the power-off state, the construction of the second map data is triggered when the vehicle is detected to be switched to the power-on state, and further, the third map data is obtained by splicing the first map data and the constructed second map data in response to the vehicle driving out of the parking lot. In this way, a general parking lot map applicable to the indoor or outdoor parking lots can be constructed.

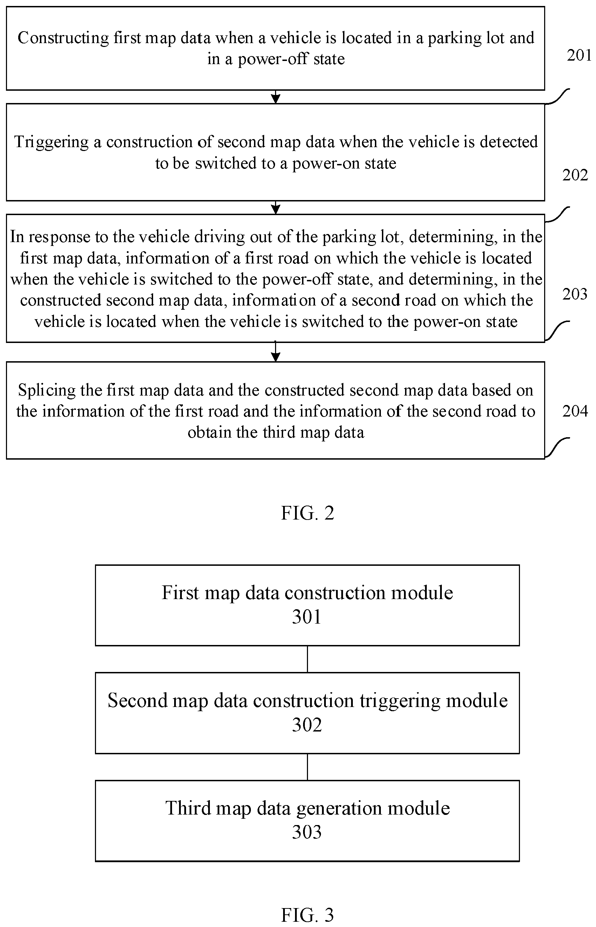

FIG. 2 is a flowchart illustrating steps of another map processing method according to an embodiment of the present disclosure. Referring to FIG. 2, the map processing method specifically includes the following steps.

At step 201, first map data is constructed when a vehicle is located in a parking lot and in a power-off state.

At step 202, a construction of second map data is triggered when the vehicle is detected to be switched to a power-on state.

At step 203, in response to the vehicle driving out of the parking lot, in the first map data, information of a first road on which the vehicle is located is determined when the vehicle is switched to the power-off state, and in the constructed second map data, information of a second road on which the vehicle is located is determined when the vehicle is switched to the power-on state.

After the start of constructing the second map data is triggered, the constructed second map data is obtained in response to the vehicle driving out of the parking lot. So that the first map data and the second map data can be spliced.

In the first map data, the road on which the vehicle is located when the vehicle is switched from the power-on state to the power-off state is the same road as in the second map data, the road on which the vehicle is located when the vehicle is switched from the power-off state to the power-on state. Thus, the information of the first road can be determined in the first map data, and the information of the second road can be determined in the second map data, the information of the first road and the information of the second road correspond to road information of a same road in an actual parking lot.

At step 204, the first map data and the constructed second map data are spliced based on the information of the first road and the information of the second road to obtain third map data.

After the information of the first road and the information of the second road are determined, the first map data and the second map data can be spliced based on the information of the first road and the information of the second road, thereby obtaining the third map data.

In an embodiment of the present disclosure, the method further includes the following steps.

At step S11, semantic elements in the third map data are optimized.

In practical applications, repetitive semantic elements may exist in the spliced third map data, and thus the semantic elements in the third map data can be further optimized to overlap identical semantic elements as much as possible.

In an embodiment of the present disclosure, said optimizing the semantic elements in the third map data includes: determining repetitive road data in the third map data; and matching semantic elements in the repetitive road data, and adjusting poses of the semantic elements based on a matching relation of the semantic elements.

In practical applications, repetitive roads may exist in the third map data, the repetitive road data can be determined by detecting roads in the third map data, and thus the semantic elements of the repetitive roads can be further obtained and matched, and the poses of the semantic elements are adjust based on the matching relation of the semantic elements.

In an example, all the matched semantic elements in the third map data may be subjected to a nonlinear optimization, aiming to allow the matched semantic elements to have the same pose as much as possible, and a relative pose change between adjacent elements is small.

At step S12, the matched semantic elements in the optimized third map data are fused.

After the semantic elements are optimized, the matched semantic elements in the optimized third map data can be fused.

In an example, a fused pose can be obtained by weighted-averaging the poses of the matched semantic elements.

In the embodiments of the present disclosure, the first map data is constructed when the vehicle is located in the parking lot and in the power-off state; the construction of second map data is triggered when the vehicle is detected to be switched to the power-on state; further, in response to the vehicle driving out of the parking lot, in the first map data, the information of the first road on which the vehicle is located is determined when the vehicle is switched to the power-off state, and in the constructed second map data, the information of the second road on which the vehicle is located is determined when the vehicle is switched to the power-on state; and the first map data and the constructed second map data are spliced based on the information of the first road and the information of the second road to obtain the third map data. In this way, a general parking lot map applicable to the indoor or outdoor parking lots can be constructed. Through the splicing of the map, a more complete map of the parking lot can be obtained.

It should be noted that, in order to simplify description of the present disclosure, the method embodiments of the present disclosure are expressed as a series of action combinations. However, those skilled in the art would appreciate that the embodiments of the present disclosure are not limited to the order of the actions, and according to the embodiments of the present disclosure, some steps may be executed in other orders or be executed simultaneously. In addition, those skilled in the art would appreciate that the embodiments described in the specification are preferred embodiments, and actions involved therein may not be necessary for the embodiments of the present disclosure.

FIG. 3 is a schematic structural diagram of a map processing apparatus according to an embodiment of the present disclosure. Referring to FIG. 3, the map processing apparatus may specifically include the following modules: a first map data construction module 301 configured to construct first map data when a vehicle is located in a parking lot and in a power-off state; a second map data construction triggering module 302 configured to trigger a construction of second map data when the vehicle is detected to be switched to a power-on state; and a third map data generating module 303 configured to obtain third map data by splicing the first map data and the constructed second map data in response to the vehicle driving out of the parking lot.

In an embodiment of the present disclosure, the apparatus further includes the following modules: a predetermined range determining module configured to determine whether the vehicle drives out of a predetermined range of the parking lot; and a second map data obtaining module configured to obtain the constructed second map data in response to the vehicle driving out of the predetermined range.

In an embodiment of the present disclosure, the third map data generating module 303 includes: a road information determining submodule configured to determine, in the first map data, information of a first road on which the vehicle is located when the vehicle is switched to the power-off state, and determine, in the constructed second map data, information of a second road on which the vehicle is located when the vehicle is switched to the power-on state; and a splicing submodule configured to splice the first map data and the constructed second map data based on the information of the first road and the information of the second road to obtain the third map data.

In an embodiment of the present disclosure, the third map data generating module 303 further includes: a semantic element optimization submodule configured to optimize semantic elements in the third map data; and a semantic element fusion submodule configured to fuse matched semantic elements in the optimized third map data.

In an embodiment of the present disclosure, the semantic element optimization submodule may include: a repetitive road data determination unit configured to determine repetitive road data in the third map data; and a semantic element pose adjusting unit configured to match semantic elements in the repetitive road data, and adjust poses of the semantic elements based on a matching relation of the semantic elements.

In an embodiment of the present disclosure, the apparatus may further include: an entrance location information determining module configured to determine entrance location information of the parking lot when the parking lot is an indoor parking lot; and a first area range determining module configured to determine, based on the entrance location information, an area range for triggering a selection of the parking lot.

In an embodiment of the present disclosure, the apparatus may further include: an identification location information determining module configured to determine identification location information of the parking lot when the parking lot is an outdoor parking lot; and a second area range determining module configured to determine, based on the identification location information, an area range for triggering a selection of the parking lot.

In an embodiment of the present disclosure, the area range includes a first area range and a second area range, and the second area range is a subset of the first area range.

In an embodiment of the present disclosure, the first map data is constructed when the vehicle is located in the parking lot and in the power-off state, the construction of the second map data is triggered when the vehicle is detected to be switched to the power-on state, further, the third map data is obtained by splicing the first map data and the constructed second map data in response to the vehicle driving out of the parking lot. In this way, a general parking lot map applicable to the indoor or outdoor parking lots can be constructed.

An embodiment of the present disclosure further provides a vehicle. The vehicle may include a processor, a memory, and a computer program stored on the memory and executable on the processor. The computer program, when executed by the processor, implements the map processing method as described above.

An embodiment of the present disclosure further provides a computer-readable storage medium having a computer program stored thereon. The computer-readable storage medium, when executed by a processor, implements the map processing method as described above.

Since the apparatus embodiments are basically similar to the method embodiments, the description of the apparatus embodiments is relatively brief. For the related description, reference may be made to a corresponding part of the description of the method embodiments.

The respective embodiments in the specification are described in a progressive manner, and each embodiment focuses on differences from other embodiments. The same or similar parts of various embodiments can be referred to each other.

Those skilled in the art should understand that the embodiments of the present disclosure can be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including, but not limited to, disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure are described as above, those skilled in the art can make additional changes and modifications to these embodiments once they learn the basic creative concept. Therefore, the appended claims are intended to include the preferred embodiments and all the changes and modifications falling within the scope of the embodiments of the present disclosure.

Further, it should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including. Thus, the process, method, article or terminal device including a series of elements include not only those elements, but also include other elements that are not explicitly listed, or also include inherent elements of the process, method, article or terminal device. Without specific limitations, an element expressed as "comprising/comprise a ..." or "including/include a" does not exclude the presence of additional identical elements in the process, method, article or terminal device that includes the said element.

The above provides detailed description of the map processing method and apparatus. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as limitations of the present disclosure.

## Claims

1. A map processing method, comprising:
constructing first map data when a vehicle is located in a parking lot and in a power-off state;
triggering a construction of second map data when the vehicle is detected to be switched to a power-on state; and
obtaining third map data by splicing the first map data and the constructed second map data in response to the vehicle driving out of the parking lot.

2. The method according to claim 1, further comprising, prior to said obtaining the third map data by splicing the first map data and the constructed second map data:
determining whether the vehicle drives out of a predetermined range of the parking lot; and
obtaining the constructed second map data in response to the vehicle driving out of the predetermined range.

3. The method according to claim 1 or 2, wherein said obtaining the third map data by splicing the first map data and the constructed second map data comprises:
determining, in the first map data, information of a first road on which the vehicle is located when the vehicle is switched to the power-off state, and determining, in the constructed second map data, information of a second road on which the vehicle is located when the vehicle is switched to the power-on state; and
splicing the first map data and the constructed second map data based on the information of the first road and the information of the second road to obtain the third map data.

4. The method according to claim 3, further comprising:
optimizing semantic elements in the third map data; and
fusing matched semantic elements in the optimized third map data.

5. The method according to claim 4, wherein said optimizing the semantic elements in the third map data comprises:
determining repetitive road data in the third map data; and
matching semantic elements in the repetitive road data, and adjusting poses of the semantic elements based on a matching relation of the semantic elements.

6. The method according to claim 1, further comprising:
determining entrance location information of the parking lot when the parking lot is an indoor parking lot; and
determining, based on the entrance location information, an area range for triggering a selection of the parking lot.

7. The method according to claim 1, further comprising:
determining identification location information of the parking lot when the parking lot is an outdoor parking lot; and
determining, based on the identification location information, an area range for triggering a selection of the parking lot.

8. The method according to claim 6 or 7, wherein the area range comprises a first area range and a second area range, the second area range being a subset of the first area range.

9. A map processing apparatus, comprising:
a first map data construction module configured to construct first map data when a vehicle is located in a parking lot and in a power-off state;
a second map data construction triggering module configured to trigger a construction of second map data when the vehicle is detected to be switched to a power-on state; and
a third map data generating module configured to obtain third map data by splicing the first map data and the constructed second map data in response to the vehicle driving out of the parking lot.

10. The apparatus according to claim 9, further comprising:
a predetermined range determining module configured to determine whether the vehicle drives out of a predetermined range of the parking lot; and
a second map data obtaining module configured to obtain the constructed second map data in response to the vehicle driving out of the predetermined range.

11. The apparatus according to claim 9 or 10, wherein the third map data generating module comprises:
a road information determining submodule configured to determine, in the first map data, information of a first road on which the vehicle is located when the vehicle is switched to the power-off state, and determine, in the constructed second map data, information of a second road on which the vehicle is located when the vehicle is switched to the power-on state; and
a splicing submodule configured to splice the first map data and the constructed second map data based on the information of the first road and the information of the second road to obtain the third map data.

12. The apparatus according to claim 11, wherein the third map data generating module further comprises:
a semantic element optimization submodule configured to optimize semantic elements in the third map data; and
a semantic element fusion submodule configured to fuse matched semantic elements in the optimized third map data.

13. The apparatus according to claim 12, wherein the semantic element optimization submodule comprises:
a repetitive road data determination unit configured to determine repetitive road data in the third map data; and
a semantic element pose adjusting unit configured to match semantic elements in the repetitive road data, and adjust poses of the semantic elements based on a matching relation of the semantic elements.

14. A vehicle, comprising a processor, a memory, and a computer program stored on the memory and executable on the processor, wherein the computer program, when executed by the processor, implements the map processing method according to any one of claims 1 to 8.

15. A computer-readable storage medium, having a computer program stored thereon, wherein the computer program, when executed by a processor, performs the map processing method according to any one of claims 1 to 8.
